# FASCICULE DE BREVET EUROPEEN

(11) **EP 0 773 689 B1**
(45) Date de publication et mention de la délivrance du brevet: **02.05.2002**
(21) Numéro de dépôt: 96402376.6
(22) Date de dépôt: 07.11.1996
(51) Int. Cl.: H04N 7/32

(54) **Dispositif de traitement de données vidéo comportant une mémoire tampon**
Videodatenverabeitungsvorrichtung mit Pufferspeicher
Video data processing device comprising a buffer memory

(30) Priorité: 09.11.1995 FR 9513281
(43) Date de publication de la demande: 14.05.1997
(73) Titulaire: THOMSON multimedia, 92648 Boulogne Cédex (FR)
(72) Inventeur: Hanna, C., Thomson Multimedia S.A., 92050 Paris La Defense 5 (FR); Dorner, A., Thomson Multimedia S.A., 92050 Paris La Defense 5 (FR); Cochon, E., Thomson Multimedia S.A., 92050 Paris La Defense 5 (FR)
(74) Mandataire: Ruellan-Lemonnier, Brigitte

(56) Documents cités:
- EP-A- 0 309 280
- EP-A- 0 430 051
- EP-A- 0 598 346
- PATENT ABSTRACTS OF JAPAN vol. 12, no. 23 (P-658), 23 Janvier 1988 & JP 62 177647 A (TOSHIBA CORP.), 4 Août 1987,

## Description

L'invention concerne un dispositif de traitement de données comportant une mémoire tampon en vue de permettre à des circuits ayant accès à cette mémoire de travailler à des vitesses différentes. L'invention s'applique notamment dans un système de transmission de données numériques par paquets tel qu'un système de transmission et de réception de télévision numérique comme le DVB ("Digital Video Broadcast").

Un récepteur de télévision digitale comporte une partie réception et démodulation et une partie de traitement de l'information proprement dite. Les données à la sortie de la partie réception se présentent généralement sous la forme de paquets de mots binaires de longueur donnée. Or, la partie de traitement de l'information ne traite pas forcément les paquets de données à la même vitesse que ceux-ci sont transmis de la partie réception.: la vitesse de traitement peut être largement supérieure à la vitesse de réception. On intercale alors entre les deux parties une mémoire tampon qui découple l'écriture par la partie réception et la lecture par la partie traitement, chacune des deux parties travaillant de manière asynchrone.

On cherche à minimiser la taille de cette mémoire tampon, en prêtant toutefois attention aux performances du système.

Le document EP-A-430 051 divulgue un système de traitement de données selon le préambule de la revendication 1.

L'invention a pour objet un dispositif de traitement de données comportant une mémoire tampon entre un premier circuit écrivant des paquets de données de longueur L dans ladite mémoire tampon et un second circuit lisant les paquets dans ladite mémoire tampon, et comportant en outre
- un pointeur d'écriture de ladite mémoire tampon, et
- des moyens de remise à zéro dudit pointeur lors de la détection du début d'un paquet,
caractérisé en ce que la taille logique de la mémoire exploitée pour tamponer les données est différente d'une puissance de deux, en étant égale à L/n arrondi à l'entier supérieur, où n est un entier supérieur ou égal à 2 et tel que la taille logique reste compatible des vitesses de travail des circuits ayant accès à la mémoire.

Selon une exemple de réalisation particulier, les moyens de remise à zéro dudit pointeur comprennent un comparateur qui compare un mot de synchronisation de début de paquet aux données reçues.

Selon un exemple de réalisation particulier, le dispositif conforme à l'invention comprend des moyens de réinitialisation du second circuit lorsque la lecture dans ladite mémoire tampon n'a pas débuté pendant un intervalle de temps déterminé après le début de l'écriture d'un paquet de données dans ladite mémoire tampon.

D'autres caractéristiques et avantages de l'invention apparaîtront à travers la description d'un exemple de réalisation particulier non limitatif illustré par les figures jointes.

La figure 1 représente un diagramme-bloc d'un récepteur de télévision digitale par satellite.

La figure 2 illustre la mémoire conforme à l'exemple de réalisation par rapport à la taille d'un paquet de données.

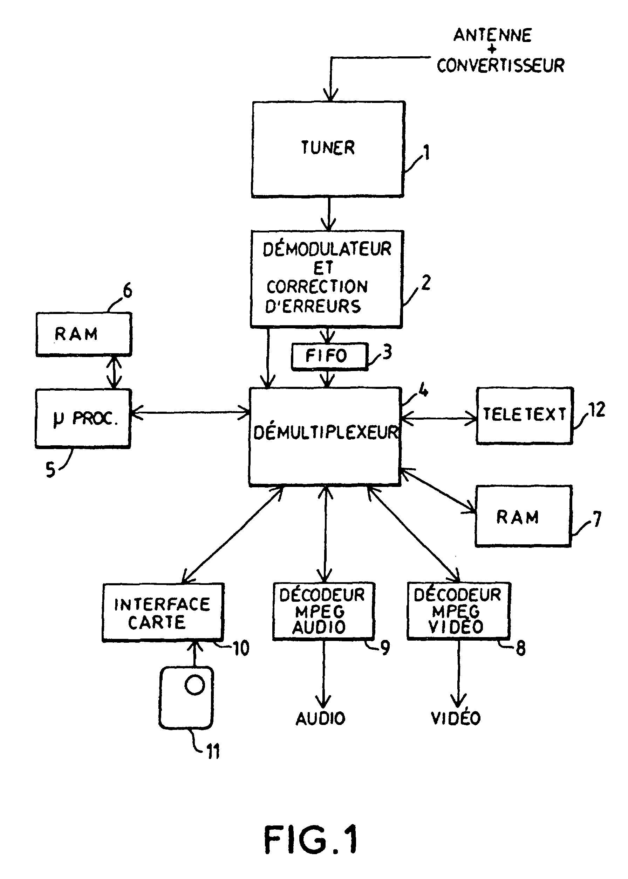

La figure 1 représente un diagramme bloc d'un décodeur de télévision numérique. Ce décodeur possède un tuner 1 relié à un convertisseur de fréquences à faible bruit qui convertit les signaux reçus par une parabole. Le tuner permet d'obtenir un signal modulé en bande de base, qui sera démodulé et corrigé par une démodulateur-correcteur d'erreurs 2. La correction d'erreurs est de type Reed-Salomon selon le présent exemple. Le signal digital est disponible à la sortie du bloc 2. Le flux de données transporté par ce signal comporte des paquets de données appelés paquets de transport, ayant une longueur fixe de 188 octets. L'organisation des paquets est décrite dans les standards ISO/IEC 13818-1 à ISO/IEC 13818-3, communément dénommés MPEG II Systèmes, Vidéo et Audio. On considérera par exemple dans ce contexte l'annexe F de MPEG II Systèmes, qui montre les types et longueurs des champs de données dans les différents paquets.

Le démodulateur et correcteur d'erreurs 2 écrit dans une mémoire de synchronisation 3, qui possède la structure d'une pile FIFO. La partie de traitement des données (références 4 et suivantes) lit à son rythme les données de la mémoire. Un circuit démultiplexeur 4 possède des filtres destinés à signaler la présence de certains types de données prédéterminées dans les paquets reçus. Les types de données, par exemple des données audio, vidéo, de contrôle d'accès etc... sont repérés par des mots d'identification, comparés par les filtres à un certain nombre de mots prédéterminés. Selon le résultat du filtrage, les paquets ou morceaux de paquets sont alors aiguillés vers les décodeurs d'application appropriés.

Le démultiplexeur 4 est contrôlé par un microcontrôleur 5 qui d'une part écrit dans des registres internes du démultiplexeur et gère une mémoire RAM 6 contenant notamment les filtres reprogrammables. Le démultiplexeur 4 adresse cette mémoire RAM en fonction des mots binaires à filtrer et y lit le résultat d'un filtrage. Un tel filtrage est décrit de manière plus détaillée dans la demande de brevet français FR-A-95 02348.

Les décodeurs d'application comprennent un décodeur MPEG 11 vidéo 8 et un décodeur MPEG II audio 9, implémentés par exemple avec des circuits intégrés fabriqués par SGS Thomson. Une interface 10 pour carte à puce 11 est également connectée au démultiplexeur 4, qui transmet à la carte à puce des données de gestion de contrôle d'accès liées à l'adresse spécifique de cette carte, ainsi que des messages d'autorisation à partir desquels la carte détermine les mots de contrôle nécessaires pour le désembrouillage des émissions. Le protocole de communication entre l'interface 10 et la carte 11 est conforme au standard ISO 7816-3. Un circuit de réinsertion "Télétext" 12 réinsère les données télétexte transmises dans des paquets séparés des données vidéo dans le signal vidéo. Selon le présent exemple de réalisation, le circuit "Télétext" est un circuit tel que celui décrit dans la demande de brevet français FR 94 08195.

Le démultiplexeur partage avec les décodeurs d'application, l'interface carte à puce et le circuit "Télétext" les ressources d'une RAM 7. Des buffers sont alloués aux différents circuits. Le démultiplexeur y stocke temporairement des données relues ultérieurement par ces circuits.

Le paquet de transport MPEG II Système a une longueur de 188 octets. Le choix de la taille de la mémoire FIFO 3 dépend de cette valeur. En effet, on cherche à utiliser une FIFO dont la taille soit inférieure à la taille d'un paquet entier, dans un but d'économie.

La mémoire FIFO 3 est gérée grâce à un pointeur d'adresse d'écriture et un pointeur d'adresse de lecture. Lorsque les pointeurs arrivent en fin de mémoire, ils sont automatiquement remis à zéro. Pour ce qui est du présent exemple de réalisation, les pointeurs font partie intégrante de la mémoire 3.

La taille de la mémoire est choisie en fonction de la contrainte suivante: lorsque la fin d'un paquet est écrite à une adresse donnée, la distance entre cette adresse et l'adresse à partir de laquelle le prochain . paquet sera écrit devra être maximale. Ceci permet de maximiser le temps dont dispose le démultiplexeur 4 pour lire les données dans cette mémoire avant que celles-ci ne soient effacées par l'écriture du paquet suivant.

Selon le présent exemple, la taille de la mémoire est de 63 octets. Ceci correspond au tiers de la taille du paquet de données, arrondi à l'entier supérieur le plus proche, étant donné que le taille du paquet divisé par trois ne donne pas un entier.

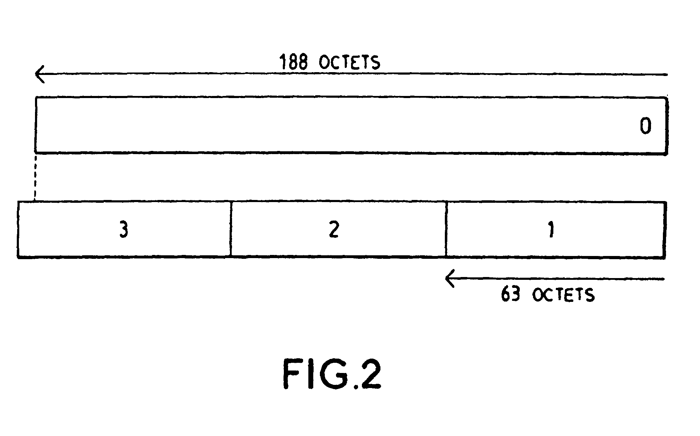

La figure 2 illustre la méthode d'écriture d'un paquet typique, c'est à dire un paquet écrit sans interruption, dans la mémoire 3. L'écriture d'un paquet commence à une adresse fixe, par convention l'adresse 0. Le pointeur d'écriture est remis à zéro lorsque le circuit démodulateur et correcteur 2 envoie un signal de validation des données dont le front montant signale le début d'un paquet de transport ou après une interruption du fonctionnement du système. Le signal de validation est aussi transmis à des composantes du démultiplexeur pour l'informer qu'un paquet peut être lu.

Pendant la première passe (chiffre 1), les 63 premiers octets du paquet sont écrits, le pointeur d'écriture rebouclant à l'adresse 0 en fin de mémoire. De la même manière, les 63 octets suivants sont écrits lors de la seconde passe. Lors de la troisième passe, la fin du paquet est écrite à l'avant-dernière adresse de la mémoire, laissant un octet libre avant que le compteur d'écriture ne soit remis à zéro pour l'écriture du paquet suivant.

Par conséquent, par rapport à la taille de la mémoire, la distance entre le dernier octet d'un paquet et le premier octet du paquet suivant est optimisée.

Le pointeur de lecture est remis à zéro en fin de paquet ou après une interruption du système (données erronées, coupure d'alimentation etc..), puisque l'adresse de début du paquet suivant est fixée à l'adresse 0.

Selon une variante de réalisation, un signal de réinitialisation du démultiplexeur est généré lorsque ce dernier n'a pas commencé à lire la mémoire tampon un certain nombre de cycles d'horloge après le début d'écriture d'une paquet. Ce signal force le démultiplexeur à commencer le traitement du paquet en cours, la réinitialisation ayant pour effet de faire sortir le démultiplexeur d'un éventuel état anormal. Cette variante permet d'obtenir une synchronisation rapide sur démultiplexeur sur les données écrites dans la mémoire tampon. En effet, le signal de validation des données transmis par le circuit 2 au circuit 4 ne fait qu'informer ce dernier de la présence d'un nouveau paquet, sans toutefois le forcer à considérer ce nouveau paquet de façon immédiate. Ceci permet le cas échéant au circuit 4 de finir de traiter le paquet précédent. Dans le cadre du présent exemple, le signal de réinitialisation est généré lorsque les 58 premiers octets d'un paquet ont été écrits sans que la lecteure n'ait commencé.

Il est bien évident que la présente invention ne se limite pas aux valeurs numériques données dans la description de l'exemple de réalisation. Notamment, le facteur de division utilisé pour déterminer la taille de la mémoire par rapport à la taille d'un paquet de données peut être différent de 3. Dans ce cas, selon que ce facteur est ou non un diviseur de la taille du paquet, arrondir à l'entier supérieur peut ne pas être nécessaire.

## Revendications

1. Dispositif de traitement de données comportant une mémoire tampon (3) entre un premier circuit (2) écrivant des paquets de données de longueur L dans ladite mémoire tampon et un second circuit (4) lisant les paquets dans ladite mémoire tampon, et comportant en outre
- un pointeur d'écriture de ladite mémoire tampon, et
- des moyens (2) de remise à zéro dudit pointeur lors de la détection du début d'un paquet, **caractérisé en ce que** la taille logique de la mémoire exploitée pour tamponner les données est différente d'une puissance de deux, en étant égale à L/n arrondi à l'entier supérieur, où n est un entier supérieur ou égal à 2 et tel que la taille logique reste compatible des vitesses de travail des circuits ayant accès à la mémoire.

2. Dispositif selon la revendication 1, **caractérisé en ce que** les moyens de remise à zéro dudit pointeur comprennent un comparateur qui compare un mot de synchronisation de début de paquet aux données reçues.

3. Dispositif selon l'une des revendications précédentes, **caractérisé en ce qu'**il comprend des moyens de réinitialisation du second circuit lorsque la lecture dans ladite mémoire tampon n'a pas débuté pendant un intervalle de temps déterminé après le début de l'écriture d'un paquet de données dans ladite mémoire tampon.

## Claims

1. Data processing device including a buffer memory (3) between a first circuit (2) writing data packets of length L into the said buffer memory and a second circuit (4) reading the packets from the said buffer memory, and also comprising:
- a write pointer for the said buffer memory and
- means (2) for resetting the said pointer to zero upon detection of the start of a packet, **characterized in that** the logical size of the memory used to buffer the data is different from a power of two, being equal to L/n rounded up to the next integer, where n is an integer greater than or equal to 2 and such that the logical size remains compatible with the working speeds of the circuits having access to the memory.

2. Device according to Claim 1, **characterized in that** the means for resetting the said pointer to zero comprise a comparator which compares a start-of-packet synchronization word with the data received.

3. Device according to one of the preceding claims, **characterized in that** it comprises means for reinitializing the second circuit if the reading from the said buffer memory has not started for a specified time interval after the start of the writing of a data packet into the said buffer memory.

## Patentansprüche

1. Datenverarbeitungsvorrichtung mit einem Pufferspeicher (3) zwischen einer ersten Schaltung (2), die Datenpakete mit der Länge L in den Pufferspeicher schreibt, und einer zweiten Schaltung (4), die die Pakete aus dem Pufferspeicher liest, und mit
- einem Schreibzeiger für den Pufferspeicher und
- Mitteln (2) zum Zurücksetzen des Zeigers auf null bei
der Detektion des Beginns eines Pakets,
**dadurch gekennzeichnet, daß**
die Größe des Speichers für die Pufferung der Daten verschieden von einer Potenz von zwei und gleich L/n ist, aufgerundet auf die nächste ganze Zahl, wobei n eine ganze Zahl größer als oder gleich 2 ist, und daß die Größe kompatibel mit den Arbeitsgeschwindigkeiten der Schaltungen bleibt, die Zugriff zu dem Speicher haben.

2. Vorrichtung nach Anspruch 1, **dadurch gekennzeichnet, daß** die Mittel zum Zurücksetzen des Zeigers auf null einen Komparator enthalten, der ein Synchronisierwort für den Beginn des Pakets mit den empfangenen Daten vergleicht.

3. Vorrichtung nach einem der vorangehenden Ansprüche, **gekennzeichnet durch** Mittel zur Reinitialisierung der zweiten Schaltung, wenn das Lesen aus dem Pufferspeicher, während eines bestimmten Zeitintervalls nach dem Beginn des Schreibens eines Datenpakets in den Pufferspeicher nicht begonnen hat.
